# EUROPÄISCHE PATENTANMELDUNG

(11) **EP 1 321 351 A2**
(43) Veröffentlichungstag der Anmeldung: **25.06.2003**
(21) Anmeldenummer: 02025209.4
(22) Anmeldetag: 12.11.2002
(51) Int. Cl.: B62D 21/11

(54) **Kraftfahrzeugvorderwagen**

(30) Priorität: 21.12.2001 DE 10163220
(71) Anmelder: Volkswagen Aktiengesellschaft, 38436 Wolfsburg (DE)
(72) Erfinder: Poznanski-Eisenschmidt, Michael, 38116 Braunschweig (DE); Dau, Wolfram, 38444 Wolfsburg (DE)

(57) **Zusammenfassung**

Ein Kraftfahrzeugvorderwagen umfaßt zwei sich im wesentlichen in Fahrzeuglängsrichtung erstreckende Längsträger (1), einen unterhalb der Längsträger (1) angeordneten Hilfsrahmen (3, 3'), gegen welchen radführende Lenker (9) abgestützt sind, und ein vormontierbares Frontendmodul (6, 6'), das wenigstens eine Motor- oder Fahrzeugfunktionskomponente wie beispielsweise einen Kühler oder eine Beleuchtungseinheit trägt, und das sowohl mit den Längsträgern (1) als auch mit dem Hilfsrahmen (3, 3') verbunden ist. Das Frontendmodul (6, 6') weist einen steifen, sich in Fahrzeugquerrichtung erstreckenden Querträger (18, 18') auf, der formschlüssig und lösbar an den Hilfsrahmen (3, 3') ankoppelbar ist, und der den Hilfsrahmen (3, 3') frontseitig zu einer Ringsstruktur schließt. Damit wird ein Kraftfahrzeugvorderwagen geschaffen, der sich bei günstigen Montageeigenschaften durch eine vor allem im Bereich des Hilfsrahmens hohe Steifigkeit auszeichnet.

## Beschreibung

Die Erfindung bezieht sich auf einen Kraftfahrzeugvorderwagen mit zwei sich im wesentlichen in Fahrzeuglängsrichtung erstreckenden Längsträgern und einem unterhalb der Längsträger angeordneten Hilfsrahmen, gegen welchen radführende Lenker abgestützt sind. Sie eignet sich insbesondere für den Einsatz bei Personenkraftwagen.

Hilfsrahmen werden im Motorraum von Kraftfahrzeugen als Montageträger für den Motor und/oder diverse Hilfsaggregate, wie z. B. ein elektrohydraulisches Steuergerät, einen Kühler, ein Lenkgetriebe, ein ABS/EDS-Gerät, etc. verwendet. Der Motor und/oder die Hilfsaggregate können so außerhalb des Motorraums montiert und als Einheit von unten in diesen eingebaut werden. Überdies trägt der Hilfsrahmen oftmals auch Komponenten der Radaufhängung des Kraftfahrzeugs, die ebenfalls an diesem vormontiert werden können.

Aus dem Stand der Technik sind bereits eine Vielzahl von Hilfsrahmenkonstruktionen bekannt, wobei zwischen offenen Hilfsrahmen und geschlossenen, sogenannten Vollhilfsrahmen zu unterscheiden ist. Letztere bilden eine ringartige Struktur bestehend aus zwei längsträgerähnlichen Traversen und einem vorderen und einem hinteren Querträger. In einer Ansicht von oben bildet die ringartige Struktur des Vollhilfsrahmens in etwa grob ein Rechteck.

Ein Kraftfahrzeugvorderwagen der vorstehend genannten Art ist beispielsweise aus der DE 199 23 693 A1 bekannt. Bei diesem ist der Vollhilfsrahmen zweiteilig ausgebildet. Ein frontseitiger Teil des Vollhilfsrahmens besteht bei Betrachtung von oben aus einem etwa U-förmigen Bügel, der mit seinen Schenkeln an die Enden von Längstraversen des rückseitigen Teils des Vollhilfsrahmens angeschlossen ist. Die Verbindungsbereiche der beiden Teile wie auch ein Querträgerabschnitt des frontseitigen Teils sind über vertikale Stützelemente an über dem Vollhilfsrahmen befindlichen Längsträgern des Fahrzeugs abgestützt. Der frontseitige Teil dient dabei als Crashbügel, der die Längsträger bei einem Frontalcrash des Fahrzeugs unterstützt und überdies den Vollhilfsrahmen in Fahrzeugquerrichtung versteift. Eine hohe Quersteifigkeit des Hilfsrahmens verbessert die Steifigkeit der Fahrzeugkarosserie im Bereich des Vorderwagens. Dies ist für das fahrdynamische Verhalten des Fahrzeugs vorteilhaft.

Auch Hinblick auf die Spurstabilität des Fahrzeugs ist eine steife Hilfsrahmenstruktur wünschenswert, um ein aus Elastizitäten des Hilfsrahmens resultierendes Eigenlenkverhalten zu vermeiden. Besonders empfindlich sind hierbei die Anlenkpunkte radführender Lenker. Bei dem aus der DE 19923693 A1 bekannten Vollhilfsrahmen sind zur Versteifung der beiden Anlenkpunkte eines Querlenkers an dem rückseitigen Teil zusätzliche Streben zwischen diesen vorgesehen.

Bei der Gestaltung eines Kraftfahrzeugvorderwagens sind überdies montagetechnische Gesichtspunkte einer Serienfertigung zu berücksichtigen. So werden in der Praxis oftmals nicht nur von unten an das Fahrzeug zu montierende Komponenten zu einer vormontierbaren Baueinheit zusammengefaßt, sondern auch von vorn an das Fahrzeug zu montierende Komponenten.

Im allgemeinen werden letztere als Frontendmodule bezeichnet, die an einem Träger wenigstens eine Motor- oder Fahrzeugfunktionskomponente wie beispielsweise einen Kühler oder eine Beleuchtungseinheit aufweisen. Solche Frontendmodule sind bereits aus dem Stand der Technik bekannt. Beispielhaft sei hier auf die DE 199 19 258 A1 hingewiesen. Das dort offenbarte Frontendmodul umfaßt einen Montageträger zur Aufnahme eines Kühlers, verschiedener Beleuchtungseinheiten und eines mit zwei beabstandet angeordneten Prallboxen versehenen Stoßfängerträgers einschließlich eines äußeren Verkleidungsteils. Die Befestigung dieses Frontendmoduls erfolgt an stirnseitigen Flanschplatten der Längsträger. Überdies ist eine weitere Abstützung gegen Karosserieabschnitte oberhalb der Längsträger vorgesehen.

Ein ähnliches Frontendmodul ist auch aus der DE 198 03 385 A1 bekannt. Zur Verbesserung der Steifigkeit des Vorderwagens wird dort an der Fahrzeugkarosserie, d. h. nicht an dem Frontendmodul, zusätzlich eine Querstrebe eingebaut. Hierdurch sollen karosserieseitige Fertigungstoleranzen vermindert werden, um eine Verspannung im Bereich des Frontendmoduls zu vermeiden.

Vor diesem Hintergrund beabsichtigt die Erfindung, einen Kraftfahrzeugvorderwagen zu schaffen, der sich bei günstigen Montageeigenschaften durch eine vor allem im Bereich des Hilfsrahmens hohe Steifigkeit auszeichnet.

Die Erfindung schlägt hierzu einen Kraftfahrzeugvorderwagen vor, der im folgenden umfaßt: zwei sich im wesentlichen in Fahrzeuglängsrichtung erstreckende Längsträger, einen unterhalb der Längsträger angeordneten Hilfsrahmen, gegen welchen radführende Lenker abgestützt sind, und ein vormontierbares Frontendmodul, das wenigstens eine Motor- oder Fahrzeugfunktionskomponente wie beispielsweise einen Kühler oder eine Beleuchtungseinheit trägt, und das sowohl mit den Längsträgern als auch mit dem Hilfsrahmen verbunden ist, wobei das Frontendmodul einen steifen, sich in Fahrzeugquerrichtung erstreckenden Querträger aufweist, der formschlüssig und lösbar an den Hilfsrahmen ankoppelbar ist und den Hilfsrahmen frontseitig zu einer Ringsstruktur schließt.

Erfindungsgemäß dient ein Abschnitt des Frontendmoduls als schließender Querträger für den Hilfsrahmen, so daß im Zusammenbauzustand ein Vollhilfsrahmen gebildet wird. Durch die formschlüssige Kopplung wird eine hohe Steifigkeit dieses Vollhilfsrahmens erzielt, die für die Spurstabilität des Fahrzeugs vorteilhaft ist und sich überdies über die Erhöhung der Quersteifigkeit des gesamten Vorderwagens günstig auf die Fahrdynamik auswirkt. Die unterstützende Wirkung des Hilfsrahmens für die Längsträger bei einem Frontalcrash bleibt erhalten.

Auch montagetechnisch bietet die erfindungsgemäße Lösung Vorteile. So können beispielsweise das Frontendmodul und der Hilfsrahmen zusammen eine Montageeinheit bilden, die anschließend an das Fahrzeug anmontiert wird.

In einer vorteilhaften Ausführungsform sind an dem Frontendmodul zwei sich in Fahrzeuglängsrichtung erstreckende Befestigungsstangen vorgesehen, die jeweils mit einem Ende an den steifen Querträger anschließen und weiterhin ein freies Ende aufweisen, und die im zusammengebauten Zustand mit dem Hilfsrahmen jeweils zweifach, d.h. mit einem querträgernahen Abschnitt und einem von diesem beabstandeten, querträgerfernen Abschnitt in Fahrzeuglängsrichtung an dem Hilfsrahmen geführt sind. Damit wird eine außerordentlich steife, formschlüssig Anbindung des Frontendmoduls an den Hilfsrahmen ermöglicht. Die Befestigungsstangen versteifen überdies die Längstraversen des gemeinsam gebildeten Vollhilfsrahmens.

In einer vereinfachten Ausgestaltungsform sind die Befestigungsstangen als kurze Kreiszylinderstücke ausgebildet, die ebenfalls eine formschlüssige Ankopplung erlauben.

Bevorzugt weist der Hilfsrahmen für jede Befestigungsstange einen stirnseitigen Flansch mit einer dem querträgernahen Abschnitt entsprechend konturierten Durchgangsöffnung und einen weiteren, von diesem beanstandeten Flansch mit einer dem querträgerfernen Abschnitt entsprechend konturierten Aufnahmeöffnung auf.

In einer weiteren, vorteilhaften Ausgestaltung liegt bei Betrachtung in Fahrzeuglängsrichtung die Querschnittsfläche der Aufnahmeöffnung innerhalb der Querschnittsfläche der Durchgangsöffnung. Damit wird ein geradliniges Einschieben des Frontendmoduls in einen beispielsweise bereits am Fahrzeug montierten Hilfsrahmen ermöglicht. Gleichzeitig wird die Unabhängigkeit der Führungsabschnitte gewahrt, so daß sich einerseits eine große Stützlänge in Fahrzeuglängsrichtung ergibt, andererseits aber im Gegensatz zu einer Rohrführung ein deutlich geringerer Einschubwiderstand besteht und die Gefahr eines Verklemmens bei der Montage niedrig bleibt.

Vorzugsweise weisen der querträgernahe und der querträgerferne Abschnitt jeweils ein kreisförmiges Außenprofil auf und sind durch einen sich in Richtung auf das freie Ende der Befestigungsstange hin verjüngenden Abschnitt miteinander verbunden. Der verjüngende Abschnitt erleichtert die Einführung der Befestigungsstangen in die zugehörigen Aufnahmen an dem Hilfsrahmen.

Zur weiteren Verbesserung der Spursteifigkeit ist gemäß einer bevorzugten Ausgestaltungsform die Aufnahmeöffnung in unmittelbarer Nähe vor einem an dem Hilfsrahmen befindlichen vorderen Lenkerlager angeordnet. Damit wird vor allem im Bereich der radseitig verursachten Krafteinleitung eine hohe Struktursteifigkeit des Vollhilfsrahmens erzielt.

Weiterhin kann das Frontendmodul an den Querträger angeformte Vertikalstrukturen zum Anschluß an die Längsträger aufweisen, welche den horizontalen Querträger unter Ausbildung eines U-förmigen Bügels fortsetzen. Hieraus resultiert ein zusätzlicher Steifigkeitsgewinn am vorderen Fahrzeugende durch die Ausbildung einer kastenartigen Struktur zwischen dem Hilfsrahmen, den Längsträgern und dem Frontendmodul. Ergänzend kann mit der gleichen Zielsetzung außerdem zwischen den Vertikalstrukturen ein an den Querträger anschließendes Strebwerk vorgesehen werden.

In einer weiteren, fertigungstechnisch vorteilhaften Ausgestaltung umfaßt das Frontendmodul ein Blechumformteil, welches mindestens den Querträger und die Vertikalstrukturen einschließt. Dabei können der Querträger und die Vertikalstrukturen als Hohlprofil ausgebildet sein. Das Strebwerk ist hingegen bevorzugt eine im wesentlichen flache, hohlraumfreie Platte, die doppelwandig aber auch einwandig ausgebildet sein kann.

Anstelle der Befestigungsstangen kann die formschlüssige Ankopplung über vertikale Wandflächen erfolgen, wobei gleichzeitig eine Führung sowohl in Fahrzeuglängsrichtung als auch in Fahrzeugquerrichtung vorgesehen wird. In einer vorteilhaften Ausgestaltung der Erfindung sind dazu an dem Frontendmodul an einem von dem Querträger rückseitigen abstehenden Abschnitt zwei im wesentlichen vertikale Stegwände vorgesehen, die im zusammengebauten Zustand des Frontendmoduls mit dem Hilfsrahmen jeweils gegen einen vertikalen Wandabschnitt des Hilfsrahmens anliegen, wobei die Stegwände derart konturiert sind, daß diese sowohl in Fahrzeuglängsrichtung als auch in Fahrzeugquerrichtung eine Festlegung bewirken. Beispielsweise kann dafür jede Stegwand einen sich in Fahrzeuglängsrichtung erstreckenden Wandteil und einen in Fahrzeugquerrichtung angewinkelten Wandteil aufweisen.

Im Hinblick auf eine besonders hohe Spursteifigkeit werden die Wandabschnitte des Hilfsrahmens, welche der Abstützung der Stegwände dienen, jeweils in unmittelbarer Nähe vor einem an dem Hilfsrahmen befindlichen vorderen Lenkerlager angeordnet.

Gemäß einer weiteren, vorteilhaften Ausgestaltungsform ist eine Befestigungslasche vorgesehen, die einen an die Stegwände angrenzenden Bereich dachförmig überlappt. Im zusammengebauten Zustand liegt die Befestigungslasche von oben auf dem Hilfsrahmen auf. Dies hat den Vorteil, daß im Reparaturfall eine Demontage des Hilfsrahmens unabhängig von dem Frontendmodul erfolgen kann. Gleichfalls kann das Frontendmodul separat von dem Hilfsrahmen ausgebaut werden. Dies verbessert die Reparaturfreundlichkeit der Fahrzeugkarosserie.

Durch an den Querträger angeformte Vertikalstrukturen, die zum Anschluß an die Längsträger dienen und die den horizontalen Querträger unter Ausbildung eines U-förmigen Bügels fortsetzen, kann wiederum ein Steifigkeitsgewinn am vorderen Fahrzeugende erzielt werden.

Das Frontendmodul umfaßt vorzugsweise ein einschaliges Blechformteil mit dem Querträger und den gegebenenfalls vorhandenen Vertikalstrukturen, das in einer Schnittebene parallel zur Fahrzeuglängsvertikalebene im Profil L-förmig ist. Dieses Blechformteil ist besonders einfach herstellbar und dient als Montageträger für die an dem Frontendmodul vorgesehenen Komponenten.

In einer weiteren, vorteilhaften Ausgestaltung der Erfindung trägt der Hilfsrahmen eine Vielzahl von Motorraumkomponenten, welche an diesem vor der Befestigung des Hilfsrahmens am Fahrzeug montierbar sind. Der mit den Motorraumkomponenten versehene Hilfsrahmen ist überdies unter einem Anstellwinkel von ca. 45 Grad in bezug auf seine endgültige Befestigungsposition verschwenkt von vorn in den Motorraum des Fahrzeugs einführbar und anschließend durch eine Schwenkbewegung um den Anstellwinkel nach oben in die Befestigungsposition im Motorraum des Fahrzeugs bringbar. Damit können fast alle Motorraumkomponenten auf einmal mittels eines großen Moduls in das Fahrzeug eingebaut werden. Der Montageaufwand wird so erheblich gesenkt, da bei Arbeiten außerhalb des Motorraums die Motorraumwände nicht stören.

Außerdem kann das Frontendmodul mit dem Hilfsrahmen so ausgestaltet werden, daß beide außerhalb des Motorraums miteinander vormontierbar sind und gemeinsam eine an das Fahrzeug anzubauende Einheit darstellen.

Nachfolgend wird die Erfindung anhand von bevorzugten Ausführungsbeispielen näher erläutert. Die Zeichnung zeigt in:
- Figur 1: eine Seitenansicht eines Kraftfahrzeugvorderwagens nach einem ersten Ausführungsbeispiel der Erfindung,
Figur 2 eine Ansicht von unten auf den Kraftfahrzeugvorderwagen aus Figur 1,
Figur 3 eine Ansicht von vorn, wobei hier lediglich das Frontendmodul näher dargestellt ist,
Figur 4 eine Ansicht von unten auf das Frontendmodul,
Figur 5 eine Ansicht von unten auf einen Kraftfahrzeugvorderwagen nach einem zweiten Ausführungsbeispiel der Erfindung,
Figur 6 eine Ansicht von vorn auf den Kraftfahrzeugvorderwagen nach Figur 5, wobei hier lediglich das Frontendmodul näher dargestellt ist,
Figur 7 eine Ansicht von oben auf das Frontendmodul, und in
Figur 8 eine Seitenansicht des Frontendmoduls.

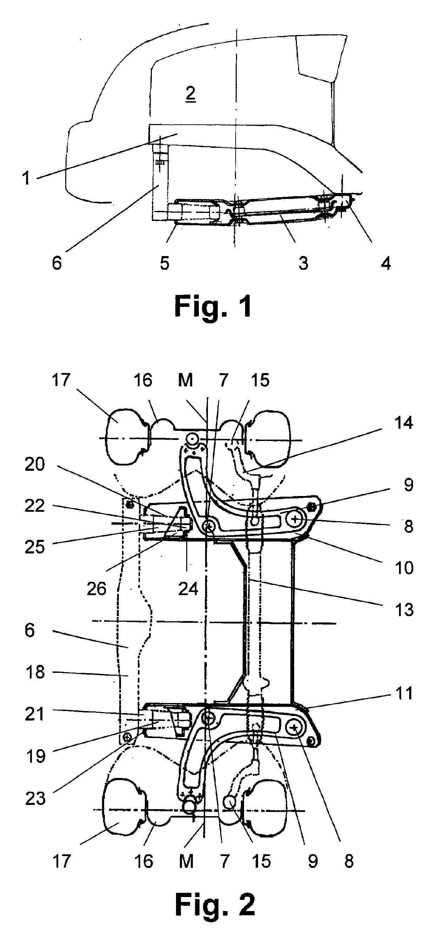

Das erste Ausführungsbeispiel in den Figuren 1 bis 4 zeigt Teile eines Vorderwagens für ein Personkraftfahrzeug. Dieser weist zwei sich in Fahrzeuglängsrichtung erstreckende Längsträger 1 auf, die im Motorraum 2 des Fahrzeugs nach oben gezogen sind. Unterhalb der Längsträger 1 befindet sich ein Hilfsrahmen 3, der an seinem hinteren Ende 4 an den beiden Längsträger 1 befestigt ist. Das vordere Ende 5 des Hilfsrahmens 3 ist über ein Frontendmodul 6 mit den Frontenden der Längsträger 1 verbunden. Unter einem Frontendmodul 6 wird hier ein Montageträger verstanden, an dem wenigstens eine Motor- oder Fahrzeugfunktionskomponente wie beispielsweise ein Kühler oder eine Beleuchtungseinheit angebracht ist, wobei diese Komponente vor dem eigentlichen Einbau des Frontendmoduls 6 in das Kraftfahrzeug an den Montageträger anmontiert wird.

In Figur 2 ist dieses Frontendmodul 6 zwischen dem Hilfsrahmen 3 und dem Längsträger 1 angeordnet. An dem zugehörigen Montageträger können jedoch auch Abschnitte vorgesehen werden, die sich nach oben über die Längsträger 1 hinaus erstrecken. Diese Abschnitte können integral mit dem Montageträger oder aber auch als mit diesem vormontierbare, weitere Trägerelemente ausgebildet sein. In jedem Fall dient jedoch das Frontendmodul der Verbindung zwischen den Frontenden der Längsträger 1 und dem vorderen Ende 5 des Hilfsrahmens 3. Die so im bodennahen Bereich des Vorderwagens erzielte Versteifung hält die Verformungen des Hilfsrahmens 3 vor allem bei der Einwirkung von Radführungskräften gering, welche über jeweils zwei Lenkerlager 7 und 8 eines Querlenkers 9 in den Hilfsrahmen 3 eingeleitet wird. Durch die höhere Strukturimpedanz wird insbesondere die Spurtreue des Kraftfahrzeugs verbessert und die Neigung zu einem Eigenlenkverhalten infolge einer durch die Hilfsrahmenelastizität bedingten Verlagerung der Lenkerlager 7 und 8 verringert.

Der Hilfsrahmen 3 umfaßt zwei im wesentlichen in Fahrzeuglängsrichtung verlaufende, in etwa parallele Längstraversen 10 und 11, die im Bereich ihrer hinteren Enden durch eine Querstrebe 12 miteinander verbunden sind. An der hinteren Querstrebe 12 ist ein Lenkgetriebe 13 befestigt. Die zugehörigen Lenkspurstangen 14 greifen jeweils an einem Anlenkpunkt 15 hinter der Radmitte M an einem Radträger 16 an, wohingegen der Anlenkpunkt 17 des Querlenkers 9 vor der Radmitte M liegt. Für eine gute Spurstabilität ist insbesondere eine hohe Impedanz im Bereich des hilfsrahmenseitig vornliegenden Lenkerlagers 7, das bei Geradeausfahrt geringfügig hinter der Radmitte M liegt, erforderlich. Gibt nämlich der Hilfsrahmen 3 im Bereich des vornliegenden Lenkerlagers 7 nach, so entsteht bei der Einwirkung von Querkräften eine in der Regel unerwünschte Eigenlenkbewegung des Fahrzeugrades 17.

Die Steifigkeit des Hilfsrahmens 3 im Bereich des vorliegenden Lenkerlagers 7 wird hier durch die besondere Art und Weise der Ankopplung des Frontendmodul 6 verbessert, wie sie unter Bezug auf die beiden Ausführungsbeispiele nun näher erläutert wird.

Bei dem ersten Ausführungsbeispiel nach den Figuren 1 bis 4 weist das Frontendmodul 6 einen steifen, sich in Fahrzeugquerrichtung erstreckenden Querträger 18 auf. Dieser ist hier an dem Montageträger, einem Blechumformteil, ausgeformt. Es ist jedoch auch möglich, den Montageträger als Schweißkonstruktion oder Gußteil auszubilden. Das Frontendmodul 6 ist nicht lediglich an den Hilfsrahmen 3 angeschraubt, sondern vielmehr vor allem auch formschlüssig an diesen angekoppelt. Dabei verbindet der Querträger 18 die frontseitigen Enden der Längstraversen 10 und 11 des Hilfsrahmens 3, so daß der U-förmige Hilfsrahmen 3 zu einem Vollhilfsrahmen mit einer Ringstruktur geschlossen wird. Die Ankopplung ist im Hinblick auf etwaige Reparaturfälle lösbar ausgestaltet.

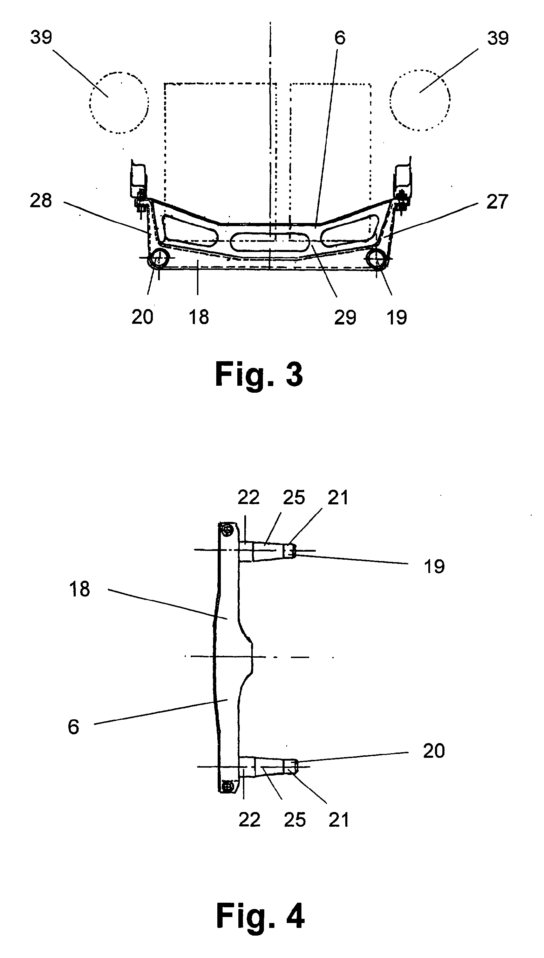

Wie insbesondere den Figuren 2 und 4 entnommen werden kann, sind an dem Querträger 18 zwei sich in Fahrzeuglängsrichtung erstreckende Befestigungsstangen 19 und 20 vorgesehen. Diese Befestigungsstangen 19 und 20 schließen jeweils mit einem Ende an den steifen Querträger 18 an und besitzen weiterhin ein freies Ende. Sie sind jeweils von vorn in entsprechende Öffnungen an dem Hilfsrahmen 3 eingeschoben, und zwar so, daß jede Befestigungsstange 19 bzw. 20 im zusammengebauten Zustand mit dem Hilfsrahmen 3 zweifach an diesem in Fahrzeuglängsrichtung geführt ist.

Die Befestigungsstangen 19 bzw. 20 besitzen zu diesem Zweck jeweils einen querträgernahen Abschnitt 21 und einen von diesem beabstandeten, querträgerfernen Abschnitt 22. Für die diese Abschnitte 21 und 22 sind an dem Hilfsrahmen 3 entsprechend konturierte Öffnungen vorgesehen. Da der querträgerferne Abschnitt 22 durch die Durchgangsöffnung 23 für den querträgernahen Abschnitt 21 hindurchgeführt werden muß, ist die Querschnittsfläche des querträgerfernen Abschnitts 22 kleiner gewählt, als die des Abschnitts 21.

In dem hier dargestellten Ausführungsbeispiel weisen diese Abschnitte 21 und 22 jeweils ein Kreisprofil auf und sind durch einen Verbindungsabschnitt 25, der sich in Richtung auf das freie Ende hin verjüngt, miteinander verbunden. Dies hat den Vorteil, daß die Befestigungsstangen 19 und 20 trotz einer großen Abstützlänge in Fahrzeuglängsrichtung ohne hohen Widerstand in den Hilfsrahmen 3 eingeschoben werden können.

Der querträgerferne Abschnitt 22 der Befestigungsstangen 19 bzw. 20 ist jeweils in einer Aufnahmeöffnung 24 geführt, die in einer an dem Hilfsrahmen 3 befestigten Konsole 26 ausgebildet ist. Wie Figur 2 zeigt, ist diese Konsole 26 unmittelbar vor dem vorderen Lenkerlager 7 angeordnet, und zwar gerade so, daß diese die Bewegungen des Querlenkers 9 nicht stört. Die Konsole 26 bzw. vor allem die in dieser gelagerte Befestigungsstange 21 bzw. 22 erhöht die Steifigkeit des Hilfsrahmens 3 im Bereich um das vornliegende Lenkerlager 7.

In einer Abwandlung des hier dargestellten Ausführungsbeispiels können die Befestigungsstangen 19 bzw. 20 auch als kurze Zylinderstücke mit einem kreisförmigen Außendurchmesser ausgebildet sein, so daß quasi lediglich der querträgernahe Abschnitt 21 vorhanden ist.

Zur weiteren Verbesserung der Quersteifigkeit weist das Frontendmodul 6 an den Querträger 18 angeformte Vertikalstrukturen 27 bzw. 28 zum Anschluß an die Längsträger 1 auf. Die Vertikalstrukturen 27 bzw. 28 bilden dabei mit dem horizontal verlaufenden Querträger 18 einen U-förmigen Bügel. Bei dem hier dargestellten Ausführungsbeispiel setzen die Vertikalstrukturen 27 und 28 das Hohlprofil des Querträger 18 fort. Außerdem ist zwischen diesen ein unmittelbar an den Querträger 18 anschließendes Strebwerk 29 vorgesehen, das einen zusätzlichen Aussteifungseffekt bewirkt. Vorzugsweise sind die vorgenannten Strukturkomponenten des Frontendmoduls 6 integral miteinander ausgebildet. Das Strebwerk 29 ist im Unterschied zu dem Querträger 18 und den Vertikalstrukturen 27 bzw. 28 aus Platzgründen als eine im wesentlichen flache, hohlraumfreie Platte ausgebildet, die gegebenenfalls mit Durchbrechung versehen sein kann. Sie kann einwandig oder auch doppelwandig sein.

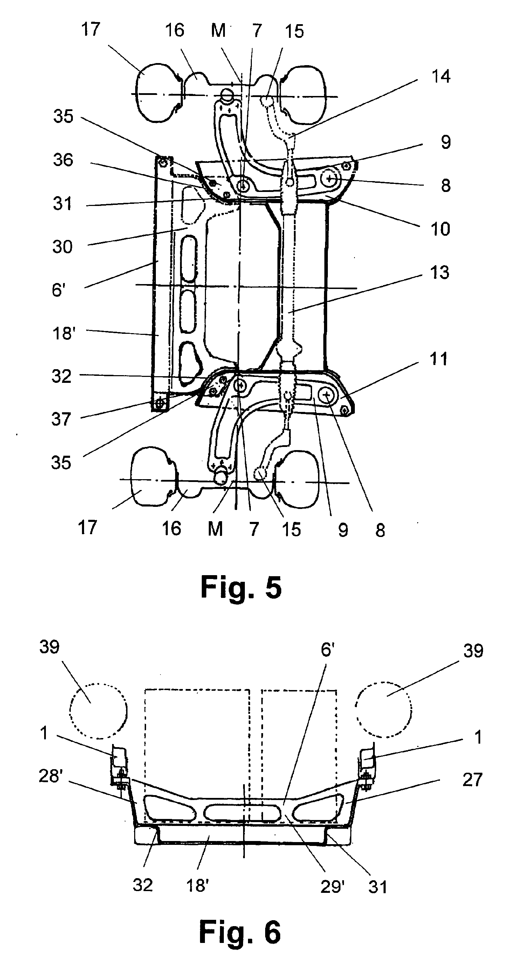

Das zweite Ausführungsbeispiel, das in den Figuren 5 bis 8 dargestellt ist, unterscheidet sich von dem ersten Ausführungsbeispiel lediglich durch die Ausgestaltung des Frontendmoduls sowie dessen Ankopplung an den Hilfsrahmen, so daß nachfolgend lediglich auf die Unterschiede näher eingegangen wird.

Anstelle mit Hilfe der Befestigungsstangen 19 und 20 erfolgt die formschlüssige Ankopplung des Frontendmoduls 6' nunmehr über sowohl in Fahrzeuglängsrichtung als auch in Fahrzeugquerrichtung konturierte vertikale Anlageflächen, die sich an dem Hilfsrahmen 3' und auch an dem Frontendmodul 6' befinden. Im Verbund der beiden vornliegenden Hilfsrahmenenden wird damit ein Formschluß sowohl in Fahrzeuglängsrichtung als auch in Fahrzeugquerrichtung erzielt, so daß das Frontendmodul 6' in definierter Lage querkraftübertragend an dem Hilfsrahmen 3' sitzt.

Das Frontendmodul 6' des zweiten Ausführungsbeispiels besitzt als Montageträger ein einschaliges Blechformteil, an dem ein steifer Querträger 18' mit einer kastenförmigen Struktur ausgeformt ist. An diesen Querträger schließen wiederum versteifte Vertikalstrukturen 27' bzw. 28' zur Ankopplung an die Längsträger 1 an. Im Profil weist dieser Montageträger in einer Schnittebene parallel zur Fahrzeuglängsvertikalebene ein L-förmiges Profil auf. Zwischen den Vertikalstrukturen ist wiederum ein versteifendes Strebwerk 29' entsprechend dem ersten Ausführungsbeispiel vorgesehen. Prinzipiell ist es jedoch auch möglich, diesen Teil des Montageträgers exakt wie in dem ersten Ausführungsbeispiel auszubilden.

Weiterhin schließt rückseitig an den Querträger 18' ein im Zusammenbauzustand im wesentlichen horizontaler verlaufender Abschnitt 30 an. Dieser Abschnitt 30 umfaßt zwei vertikale Stegwände 31 bzw. 32, die sich in Richtung des Hilfsrahmens 3' erstrecken. Jede dieser Stegwände 31 bzw. 32 umfaßt einen sich in Fahrzeuglängsrichtung erstreckenden Wandteil 33 und einen im wesentlichen dazu in Fahrzeugquerrichtung angewinkelten Wandteil 34. Diese beiden Wandteile 33 und 34, die kontinuierlich ineinander übergehen, dienen der Anlage gegen den Hilfsrahmen 3', der an seinen frontseitigen Enden entsprechend konturierte vertikale Wandabschnitte 36 bzw. 37 aufweist. Die vertikalen Wandabschnitte 36 bzw. 37 des Hilfsrahmens 3' befinden sich wiederum unmittelbar vor dem vorderen Lenkerlager 7, um den Hilfsrahmen 3' in diesem Bereich besonders auszusteifen.

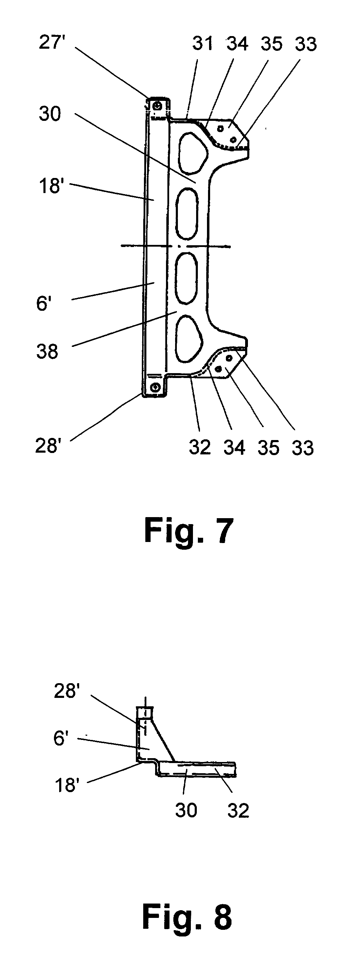

Wie insbesondere Figur 5 und Figur 7 zu entnehmen ist, werden die beiden Wandteile 33 und 34 der Stegwände 31 bzw. 32 durch eine Befestigungslasche 35 dachförmig überlappt. Über diese Befestigungslasche 35 stützt sich das Frontendmodul 6' im zusammengebauten Zustand von oben auf dem Hilfsrahmen 3' ab. Außerdem kann im Bereich der Befestigungslasche 35 eine lösbare Verbindung mittels Schraubbolzen und dergleichen erfolgen. Dies hat den Vorteil, daß selbst nach einer Montage des Frontendmoduls 6' der Hilfsrahmen 3' separat von dem Frontendmodul 6' ausgebaut werden kann. Genauso ist ein separates Ausbauen auch für das Frontendmodul 6' möglich.

Um die Stegwände 31 bzw. 32 in Fahrzeugquerrichtung zusätzlich auszusteifen, ist zwischen diesen ein horizontales Strebwerk 38 entsprechend dem vertikalen Strebwerk 29' vorgesehen.

Bei der Montage können der Hilfsrahmen 3 bzw. 3' und das Frontendmodul 6 bzw. 6' zunächst unabhängig voneinander mit den zugehörigen Komponenten vormontiert werden. Anschließend wird der Hilfsrahmen und danach das Frontendmodul an dem Kraftfahrzeugvorderwagen befestigt. Es ist jedoch auch möglich, zunächst das Frontendmodul und den Hilfsrahmen zu einer gemeinsamen Einheit zusammenzufassen und diese dann insgesamt an dem Fahrzeug anzubringen.

Eine Montagemöglichkeit besteht auch darin, den vollständig vormontierten Hilfsrahmen oder auch die gesamte Einheit zunächst um einen Anstellwinkel von 30 bis 60 Grad in bezug auf die endgültige Befestigungsposition an dem Fahrzeug nach unten zu schwenken. In dieser verschwenkten Stellung wird dann der mit den Motorraumkomponenten versehene Hilfsrahmen bzw. die Einheit von vorn in den Motorraum 2 des Fahrzeugs eingefahren, und zwar soweit, bis die Scheinwerfer 39 fast vor ihrer Einbaulage im Fahrzeug angelangt sind. Anschließend wird der Hilfsrahmen bzw. die Einheit durch eine Schwenkbewegung um den Anstellwinkel nach oben in die Befestigungsposition gedreht und im Motorraum des Fahrzeugs befestigt. Hierbei kann gleichzeitig auch die Montage der Radaufhängung erfolgen, deren Federbeine in Widerlagern an Federbeindomen der Fahrzeugkarosserie einrasten.

### BEZUGSZEICHENLISTE

- 1: Längsträger
- 2: Motorraum
- 3, 3': Hilfsrahmen
- 4: hinteres Ende des Hilfsrahmens
- 5: vorderes Ende des Hilfsrahmens
- 6, 6': Frontendmodul
- 7: vorderes Lenkerlager
- 8: hinteres Lenkerlager
- 9: Querlenker
- 10: Längstraverse
- 11: Längstraverse
- 12: hinteren Querträger
- 13: Lenkergetriebe
- 14: Lenkspurstange
- 15: Anlenkpunkt der Lenkspurstange
- 16: Radträger
- 17: Fahrzeugrad
- 18, 18': Querträger des Frontendmoduls
- 19: Befestigungsstange
- 20: Befestigungsstange
- 21: querträgernaher Abschnitt
- 22: querträgerferner Abschnitt
- 23: Durchgangsöffnung
- 24: Aufnahmeöffnung
- 25: Verbindungsabschnitt
- 26: Konsole
- 27, 27': Vertikalstruktur
- 28, 29': Vertikalstruktur

- 29, 29': horizontales Strebwerk
- 30: rückseitiger Abschnitt
- 31: vertikale Stegwand
- 32: vertikale Stegwand
- 33: in Fahrzeuglängsrichtung verlaufender Wandteil
- 34: in Fahrzeugquerrichtung angewinkelter Wandteil
- 35: Befestigungslasche
- 36: Wandabschnitt
- 37: Wandabschnitt
- 38: horizontales Strebwerk
- 39: Fahrzeugscheinwerfer

## Patentansprüche

1. Kraftfahrzeugvorderwagen, umfassend:
zwei sich im wesentlichen in Fahrzeuglängsrichtung erstreckende Längsträger (1),
einen unterhalb der Längsträger (1) angeordneten Hilfsrahmen (3, 3'), gegen welchen radführende Lenker (9) abgestützt sind, und
ein vormontierbares Frontendmodul (6, 6'), das wenigstens eine Motor- oder Fahrzeugfunktionskomponente wie beispielsweise einen Kühler oder eine Beleuchtungseinheit trägt, und das sowohl mit den Längsträgern (1) als auch mit dem Hilfsrahmen (3, 3') verbunden ist, wobei das Frontendmodul (6, 6') einen steifen, sich in Fahrzeugquerrichtung erstreckenden Querträger (18, 18') aufweist, der formschlüssig und lösbar an den Hilfsrahmen (3, 3') ankoppelbar ist und den Hilfsrahmen (3, 3') frontseitig zu einer Ringsstruktur schließt.

2. Kraftfahrzeugvorderwagen nach Anspruch 1, **dadurch gekennzeichnet, daß** an dem Frontendmodul (6) zwei sich in Fahrzeuglängsrichtung erstreckende Befestigungsstangen (19, 20) vorgesehen sind, die jeweils mit einem Ende an den steifen Querträger (18) anschließen und weiterhin ein freies Ende aufweisen, und die im zusammengebauten Zustand mit dem Hilfsrahmen (3) jeweils zweifach, d.h. mit einem querträgernahen Abschnitt (21) und einem von diesem beabstandeten, querträgerfernen Abschnitt (22) in Fahrzeuglängsrichtung an dem Hilfsrahmen (3) geführt sind.

3. Kraftfahrzeugvorderwagen nach Anspruch 2, **dadurch gekennzeichnet, daß** der Hilfsrahmen (3) für jede Befestigungsstange (19, 20) einen stirnseitigen Flansch mit einer dem querträgernahen Abschnitt (21) entsprechend konturierten Durchgangsöffnung (23) und einen weiteren, von diesem beanstandeten Flansch mit einer dem querträgerfernen Abschnitt (22) entsprechend konturierten Aufnahmeöffnung (24) aufweist.

4. Kraftfahrzeugvorderwagen nach Anspruch 3, **dadurch gekennzeichnet, daß** bei Betrachtung in Fahrzeuglängsrichtung die Querschnittsfläche der Aufnahmeöffnung (24) innerhalb der Querschnittsfläche der Durchgangsöffnung (23) liegt.

5. Kraftfahrzeugvorderwagen nach einem der Ansprüche 2 bis 4, **dadurch gekennzeichnet, daß** der querträgernahe und der querträgerferne Abschnitt (21, 22) jeweils ein kreisförmiges Außenprofil aufweisen und durch einen sich in Richtung auf das freie Ende der Befestigungsstange hin verjüngenden Abschnitt (25) miteinander verbunden sind.

6. Kraftfahrzeugvorderwagen nach einem der Ansprüche 3 bis 5, **dadurch gekennzeichnet, daß** die Aufnahmeöffnung (24) in unmittelbarer Nähe vor einem an dem Hilfsrahmen (3) befindlichen vorderen Lenkerlager (7) angeordnet ist.

7. Kraftfahrzeugvorderwagen nach einem der Ansprüche 1 bis 6, **dadurch gekennzeichnet, daß** das Frontendmodul (6) an den Querträger (18) angeformte Vertikalstrukturen (27, 28) zum Anschluß an die Längsträger (1) aufweist, die den horizontalen Querträger (18) unter Ausbildung eines U-förmigen Bügels fortsetzen.

8. Kraftfahrzeugvorderwagen nach Anspruch 7, **dadurch gekennzeichnet, daß** zwischen den Vertikalstrukturen (27, 28) ein an den Querträger (18) anschließendes Strebwerk (29) vorgesehen ist.

9. Kraftfahrzeugvorderwagen nach einem der Ansprüche 1 bis 8, **dadurch gekennzeichnet, daß** das Frontendmodul ein Blechumformteil mit dem Querträger (18) und den gegebenenfalls vorhandenen Vertikalstrukturen (27, 28) umfaßt.

10. Kraftfahrzeugvorderwagen nach einem der Ansprüche 8 oder 9, **dadurch gekennzeichnet, daß** der Querträger (18) und die Vertikalstrukturen (27, 28) als Hohlprofile ausgebildet sind, das Strebwerk (29) hingegen eine im wesentlichen flache, hohlraumfreie, vorzugsweise einwandige Platte ist.

11. Kraftfahrzeugvorderwagen nach Anspruch 1, **dadurch gekennzeichnet, daß** an einem von dem Querträger (18') des Frontendmoduls (6') rückseitig abstehenden Abschnitt (30) zwei im wesentlichen vertikale Stegwände (31, 32) vorgesehen sind, die im zusammengebauten Zustand des Frontendmoduls (6') mit dem Hilfsrahmen (3') jeweils gegen einen vertikalen Wandabschnitt (36, 37) des Hilfsrahmens (3') anliegen, wobei die Stegwände (31, 32) derart konturiert sind, daß diese sowohl in Fahrzeuglängsrichtung als auch in Fahrzeugquerrichtung eine Festlegung bewirken.

12. Kraftfahrzeugvorderwagen nach Anspruch 11, **dadurch gekennzeichnet, daß** die vertikalen Stegwände (31, 32) jeweils einen sich in Fahrzeuglängsrichtung erstreckenden Wandteil (33) und einen im wesentlichen in Fahrzeugquerrichtung angewinkelten Wandteil (34) aufweisen.

13. Kraftfahrzeugvorderwagen nach Anspruch 11 oder 12, **dadurch gekennzeichnet, daß** eine Befestigungslasche (35) einen an die Stegwände (31, 32) angrenzenden Bereich dachförmig überlappt und im zusammengebauten Zustand von oben auf dem Hilfsrahmen (3') aufliegt.

14. Kraftfahrzeugvorderwagen nach einem der Ansprüche 11 bis 13, **dadurch gekennzeichnet, daß** die Wandabschnitte (36, 37) des Hilfsrahmens (3'), welche der Abstützung der Stegwände (31, 32) dienen, jeweils in unmittelbarer Nähe vor einem an dem Hilfsrahmen (3') befindlichen vorderen Lenkerlager (7) angeordnet sind.

15. Kraftfahrzeugvorderwagen nach einem der Ansprüche 11 bis 14, **dadurch gekennzeichnet, daß** das Frontendmodul (6') an den Querträger (18') angeformte Vertikalstrukturen (27', 28') zum Anschluß an die Längsträger (1) aufweist, die den horizontalen Querträger (18') unter Ausbildung eines U-förmigen Bügels fortsetzen.

16. Kraftfahrzeugvorderwagen nach einem der Ansprüche 1 bis 15, **dadurch gekennzeichnet, daß** das Frontendmodul (6, 6') ein einschaliges Blechformteil mit dem Querträger (18') und den Vertikalstrukturen (27', 28') umfaßt, das in einer Schnittebene parallel zur Fahrzeuglängsvertikalebene im Profil L-förmig ist.

17. Kraftfahrzeugvorderwagen nach einem der Ansprüche 1 bis 16, **dadurch gekennzeichnet, daß** der Hilfsrahmen (3, 3') eine Vielzahl von Motorraumkomponenten trägt, welche an diesem vor der Befestigung des Hilfsrahmens (3, 3') am Fahrzeug montierbar sind, und daß der mit den Motorraumkomponenten versehene Hilfsrahmen (3, 3') unter einem Anstellwinkel von ca. 45 Grad in bezug auf seine endgültige Befestigungsposition von vorn in den Motorraum (2) des Fahrzeugs einführbar und anschließend durch eine Schwenkbewegung um den Anstellwinkel nach oben in die Befestigungsposition im Motorraum (2) des Fahrzeugs bringbar ist.

18. Kraftfahrzeugvorderwagen nach einem der Ansprüche 1 bis 17, **dadurch gekennzeichnet, daß** das Frontendmodul (6, 6') mit dem Hilfsrahmen (3, 3') außerhalb des Motorraums (2) vormontierbar ist und vormontiert wird.
